# EUROPÄISCHE PATENTSCHRIFT

(11) **EP 0 864 767 B1**
(45) Veröffentlichungstag und Bekanntmachung des Hinweises auf die Patenterteilung: **09.10.2002**
(21) Anmeldenummer: 98104116.3
(22) Anmeldetag: 07.03.1998
(51) Int. Cl.: F16B 37/12, E05B 1/00

(54) **Verbindungsmuffe und Vorrichtung zur Befestigung von Gegenständen an Wänden oder dgl.**
Junction sleeve and device for fastening articles to walls or the like
Manchon de raccord et dispositif pour la fixation d'objets à des murs ou similaires

(30) Priorität: 11.03.1997 DE 29704342 U
(43) Veröffentlichungstag der Anmeldung: 16.09.1998
(73) Patentinhaber: HEWI HEINRICH WILKE GMBH, 34454 Bad Arolsen (DE)
(72) Erfinder: Dziuk, Richard, D-34454 Bad Arolsen (DE)
(74) Vertreter: Freiherr von Schorlemer, Reinfried, Dipl.-Phys.

(56) Entgegenhaltungen:
- DE-U- 9 017 935
- DE-U- 29 620 246
- GB-A- 1 482 624
- US-A- 2 823 574
- US-A- 4 003 287

## Beschreibung

Die Erfindung betrifft eine Verbindungsmuffe nach dem Oberbegriff des Anspruchs 1 und eine Vorrichtung nach dem Oberbegriff des Anspruchs 7.

Es besteht häufig die Aufgabe, Gegenstände wie z.B. Griffe, Halter, Haken oder Tragstangen an Wänden zu befestigen, die nur von einer Seite her zugänglich sind oder bei denen die Befestigung nur von einer Seite her erfolgen soll. Probleme ergeben sich dabei insbesondere dann, wenn es sich um eine Wand in Form eines Tür- oder Fensterflügels handelt, der aus einem aus Stahl oder Aluminium hergestellten Hohlprofil besteht, wie dies bei Glas- oder Leichtmetalltüren oder -fenstern häufig der Fall ist, bei denen dünne Wandteile mit einer Stärke von z.B. nur 1,5 mm bis 2,5 mm durch dazwischen befindliche Hohlräume getrennt sind.

Bei Konstruktionen dieser Art müssen die Gegenstände auch nach einer Vielzahl von auf sie ausgeübten Lastwechseln (z.B. 30.000 Lastwechseln) noch spiel- und wackelfrei an der betreffenden Wand montiert sein. Um dies sicherzustellen, erfolgt die Montage der Gegenstände an der Wand häufig mit Bolzen in Form von Stehbolzen, die je einen Außengewindeabschnitt, einen mit einer Querbohrung versehenen Montageabschnitt und ein zwischen diesen beiden befindliches, auch zum Ansetzen eines Werkzeugs geeignetes Anschlagelement aufweisen. Der Montageabschnitt wird dabei von einem hohl ausgeformten Endabschnitt des Gegenstands aufgenommen und mittels eines die Querbohrung durchragenden Querstifts in diesem festgelegt. Dagegen dient der Außengewindeabschnitt der Befestigung, indem er in eine Mutter eingedreht wird, die vor der Montage des Stehbolzens durch eine Wandbohrung eingeführt und in einem Hohlraum des Hohlprofils angeordnet wird. Spezielle, insbesondere bananenähnliche Formen der Mutter ermöglichen es dabei, auch bei engen räumlichen Verhältnissen mit kleinen Bohrungsquerschnitten auszukommen und eine stabile Verbindung zu schaffen, indem der Bohrungsrand zwischen der Mutter und dem Anschlagelement des Stehbolzens fest eingespannt wird (DE 93 14 641 U1).

Zur Befestigung der Gegenstände an Wänden, die aus einer massiven Platte aus Holz oder irgendeinem anderen, vergleichbar weichen Material wie z.B. gewissen Kunststoffen bestehen, enthält der Außengewindeabschnitt des Stehbolzens vorzugsweise ein selbstschneidendes Holzgewinde mit einer vergleichsweise großen Gewindesteigung von z.B. 3,5 mm. Um die hierbei auftretenden Probleme bei der korrekten Ausrichtung der im Montageabschnitt befindlichen Querbohrung zu vermeiden, sind in einer früheren Anmeldung derselben Anmelderin (DE 296 05 742 U1) Verbindungsmuffen und Vorrichtungen vorgeschlagen worden, bei denen der Außengewindeabschnitt der Verbindungsmuffe eine so große Steigung erhalten kann, wie es für das feste Eindrehen in ein vergleichsweise weiches Material wie z.B. Holz erwünscht ist, während der Innengewindeabschnitt mit einer so kleinen Steigung versehen werden kann, wie es beim Eindrehen des Stehbolzens zur genauen Ausrichtung von dessen Querbohrung erwünscht ist.

Zur Montage von Gegenständen an Hohlprofilen ist die beschriebene Verbindungsmuffe nicht geeignet. Das gilt im Prinzip auch für eine bekannte Verbindungsmuffe der eingangs bezeichneten Gattung, die zusätzlich an einem dem äußeren Ende zugewandten Endabschnitt wenigstens eine, über einige der Gewindegänge erstreckte Schneidkante aufweist, die das Selbstschneiden des Gewindes fördert (US-A-2 823 574). Weder diese noch ähnliche andere bekannte Verbindungsmuffen (GB-A-1 482 624, DE-U-9 017 935) tragen den speziellen Anforderungen Rechnung, die sich bei der Befestigung von Gegenständen der beschriebenen Art an mit dünnen Wandteilen versehenen Hohlprofilen ergeben.

Der Erfindung liegt daher die Aufgabe zugrunde, eine Verbindungsmuffe der eingangs bezeichneten Gattung und eine damit ausgerüstete Vorrichtung zu schaffen, die auch oder insbesondere zur Befestigung von Gegenständen an aus Hohlprofilen bestehenden Wänden geeignet sind.

Zur Lösung dieser Aufgabe dienen die kennzeichnenden Merkmale der Ansprüche 1 und 7.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 die Vorderansicht einer erfindungsgemäßen Verbindungsmuffe;
Fig. 2 einen Längsschnitt durch die Verbindungsmuffe nach Fig. 1;
Fig. 3 eine Draufsicht auf die Verbindungsmuffe nach Fig. 1;
Fig. 4 eine vergrößerte Einzelheit X der Verbindungsmuffe nach Fig. 2;
Fig. 5 einen Querschnitt durch die Verbindungsmuffe längs der Linie IV-IV der Fig. 2;
Fig. 6 und 7 jeweils einen Vertikalschnitt durch eine erfindungsgemäße Vorrichtung zur Befestigung eines Gegenstands an einer aus einem Hohlprofil bestehenden Wand; und
Fig. 8 eine erfindungsgemäße Vorrichtung zur Befestigung von zwei Gegenständen an einer Holzwand.

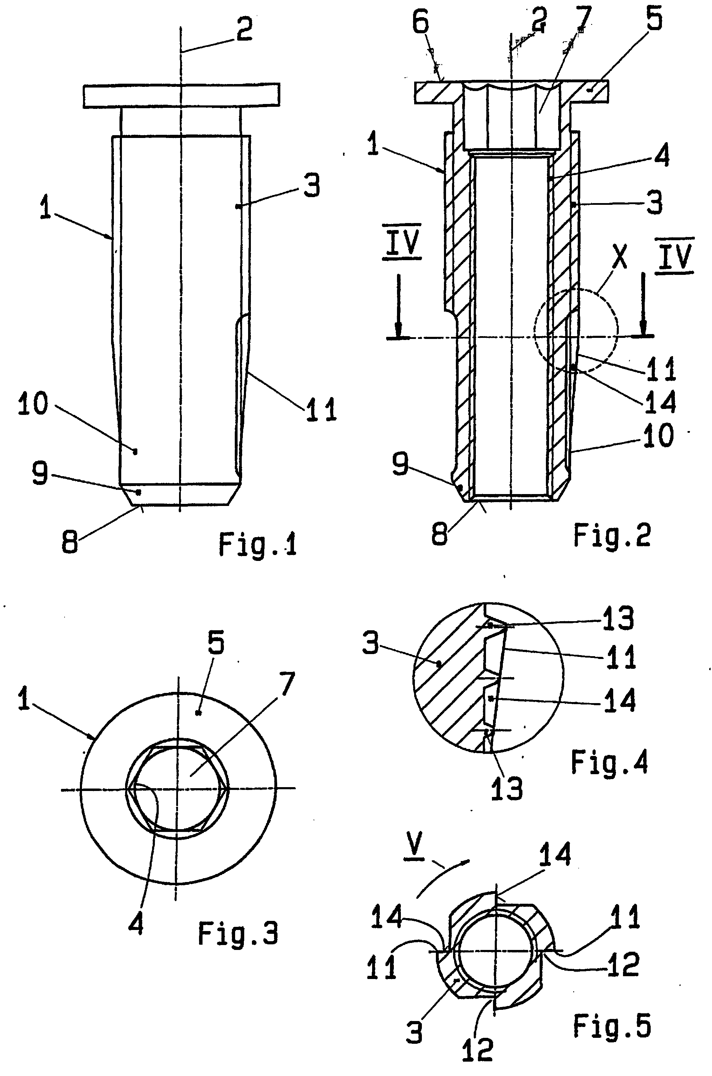

Fig. 1 bis 5 zeigen eine erfindungsgemäße, hülsenförmige Verbindungsmuffe 1, die eine Längsachse 2 aufweist und zumindest in einem mittleren Teil mit einem zur Verankerung in einer Wand oder dgl. bestimmten Außengewindeabschnitt 3 versehen ist, der vorzugsweise ein selbstschneidend ausgebildetes Gewinde mit einem Außen- bzw. Nenndurchmesser von z.B. ca. 15,5 mm bei einem Kerndurchmesser von ca. 13,8 mm und einer Gewindesteigung von ca. 2,5 mm bis 3 mm hat. Außerdem weist die Verbindungsmuffe 1 einen zur Aufnahme eines Gewindebolzens bestimmten Innengewindeabschnitt 4 auf, der wenigstens an ein erstes, vorzugsweise mit einem Anlageflansch 5 versehenes, stirnseitiges Ende 6 der Verbindungsmuffe 1 grenzt. Der Innengewindeabschnitt 4 ist zweckmäßig mit einem üblichen Metallgewinde versehen, das z.B. das Maß M10 hat. An diesem Ende 6 kann die Verbindungsmuffe 1 außerdem mit einem Mittel zum Ansetzen eines Werkzeugs versehen sein, das im Ausführungsbeispiel aus einem in den Anlageflansch 5 eingearbeiteten Sechskantloch 7 besteht, dessen Innenquerschnitt größer als der des Innengewindeabschnitts 4 ist.

An das vom Anlageflansch 5 entfernt liegende, zweite stirnseitige Ende 8 der Verbindungsmuffe 1 grenzt im Ausführungsbeispiel ein konischer Einführungsabschnitt 9, dessen Durchmesser in Richtung der Längsachse 2 vom Ende 8 her bis auf den Durchmesser eines an den Einführungsabschnitt 9 angrenzenden, zylindrischen Führungsabschnitts 10 zunimmt. Dieser Führungsabschnitt 10 ist zwischen dem Einführungsabschnitt 9 und dem Außengewindeabschnitt 3 angeordnet und weist einen im wesentlichen dessen Kerndurchmesser entsprechenden Durchmesser auf.

Nach einem besonderen Merkmal der Erfindung ist der Außengewindeabschnitt 3 an seinem dem zweiten Ende 8 der Verbindungsmuffe 1 zugewandten Ende mit wenigstens einer zur Längsachse 2 im wesentlichen parallelen, über einige seiner Gewindegänge erstreckten Schneidkante 11 versehen. Diese entsteht z.B. dadurch, daß in den Außenmantel der Verbindungsmuffe 1 durch Fräsen oder dgl. eine achsparallele, dreieckförmige Nut 12 oder Aussparung eingearbeitet wird, die sich über den Führungsabschnitt 10 und einen daran angrenzenden, z.B. 3 bis 5 Gewindegänge 13 (Fig. 4) umfassenden Teil des insgesamt z.B. 15 Gewindegänge 13 aufweisenden Außengewindeabschnitts 3 erstreckt. Im Ausführungsbeispiel sind vier derartige Schneidkanten 11 vorgesehen, die in Winkelabständen von je ca. 90° gleichmäßig längs des Umfangs der Verbindungsmuffe 1 verteilt angeordnet sind. Außerdem sind die Schneidkanten 11 zweckmäßig einerseits durch den Außenmantel der Verbindungsmuffe 1 und andererseits durch je eine durch spanabhebende Bearbeitung entstandene Fläche 14 (Fig. 5) gebildet, die im wesentlichen radial und senkrecht zum Außenmantel verläuft, so daß eine scharfe, ca. 90° betragende Schneide entsteht, die beim Eindringen der Verbindungsmuffe 1 in eine Wand in Richtung des Pfeils v (Fig. 5) wirksam wird. Die Tiefe der Nut bzw. Aussparung 12 in radialer Richtung ist vorzugsweise so groß gewählt, daß die radialen, die Schneidkanten 11 bildenden Flächen 14 nicht nur die Gewindegänge 13 durchsetzen, sondern auch noch um z.B. 1 bis 2 mm in den sie tragenden Kern ragen. An ihrem inneren Ende geht die Fläche 14 vorzugsweise in eine senkrecht zu ihr verlaufende Fläche 15 über, die unter einen um 90° abweichenden Winkel auf den Außenmantel trifft und mit diesem einen stumpfen Winkel bildet (Fig. 5). Diese Fläche 15 läuft der Fläche 14 beim Drehen der Verbindungsmuffe 1 in Richtung des Pfeils v voraus.

Die beschriebene Verbindungsmuffe 1 besteht vorzugsweise aus Stahl, insbesondere gehärtetem Stahl.

Nach einer besonders bevorzugten Ausführungsform der Erfindung nimmt der durch die Spitzen der Gewindegänge 13 gebildete Außendurchmesser des Außengewindeabschnitts 3, wie insbesondere Fig. 2 und 4 zeigen, im Bereich der Schneidkanten 11 in Richtung des zweiten Endes 8 vom Nenndurchmesser auf einen kleineren Durchmesser ab, der z.B. dem Außendurchmesser des Führungsabschnitts 10 entspricht. Dadurch liegen die Spitzen der beteiligten Gewindegänge 13, von denen in Fig. 4 drei gezeigt sind, auf Linien, die mit der Achse 2 der Verbindungsmuffe 1 einen Winkel von z.B. 5° bis 10° bilden.

Die beschriebene Verbindungsmuffe 1 kann überall dort mit Vorteil eingesetzt werden, wo vergleichsweise schwere oder stark zu belastende Gegenstände an einer aus vergleichsweise weichem Material bestehenden Wand befestigt werden müssen. Hierzu ist lediglich erforderlich, die Wand mit einer Bohrung zu versehen, die etwas kleiner als der Nenndurchmesser des Außengewindeabschitts 3 ist und im beschriebenen Ausführungsbeispiel z.B. 14 mm beträgt. Beim Eindrehen der Verbindungsmuffe 1 in eine derartige Bohrung graben sich dann die Schneidkanten 11 und Gewindegänge 13 selbstschneidend in das Wandmaterial ein, wodurch insbesondere wegen der Schneidkanten 11 vergleichsweise geringe Kräfte aufzuwenden sind. Der vom Ende 8 bis zu Erreichen des Nenndurchmessers erstreckte Teil der Verbindungsmuffe 1 wirkt dabei nach Art eines Gewindebohrers, der die Bohrungswandung zur Aufnahme der den Nenndurchmesser aufweisenden Gewindegänge 13 vorbereitet. Nach dem Festziehen der Verbindungsmuffe 1 bis zum Anschlag des Anlageflansches 5 an die Wand ergibt sich ein äußerst fester Sitz, so daß jetzt Gegenstände an sich beliebiger Art mittels eines in den Innengewindeabschnitt 4 eingedrehten Gewindebolzens an der Wand montiert werden können.

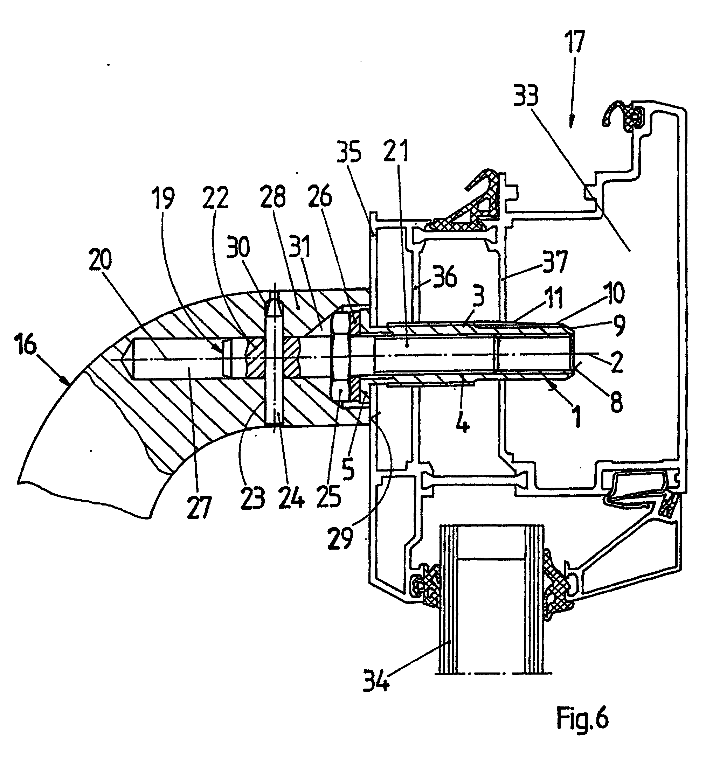

Fig. 6 zeigt eine die Verbindungsmuffe 1 umfassende erfindungsgemäße Vorrichtung zur Montage eines Gegenstands 16 in Form eines Handgriffs an einer Wand 17. Die Vorrichtung enthält einen als Stehbolzen ausgebildeten Bolzen 19 mit einer Längsachse 20. In Richtung dieser Längsachse 20 enthält der Bolzen 19 zwei koaxiale, hintereinander angeordnete Abschnitte, nämlich einen Außengewindeabschnitt 21, der normalerweise zum Eindrehen in eine Wand dient, und einen Montageabschnitt 22, der eine quer zur Längsachse 20 angeordnete Querbohrung 23 zur Aufnahme eines Sicherungsstifts 24 aufweist. Zwischen den beiden Abschnitten 21 und 22 ist ein z.B. als Sechskant ausgebildetes Anschlagelement 25 mit einem Querschnitt angeordnet, der größer als der Querschnitt des Außengewindeabschnitts 21 ist. Vorzugsweise sind der Außengewindeabschnitt 21, der Montagabschnitt 22 und das Anschlagelement 25 aus Stahl oder dgl. und aus einem Stück hergestellt, doch könnte beispielsweise auch vorgesehen sein, das Anschlagelement 25 als Sechskantmutter auszubilden und diese fest auf den Außengewindeabschnitt 21 aufzudrehen oder mit diesem zu verschweißen. Der Außengewindeabschnitt 21 ist vorzugsweise mit einem Metallgewinde, insbesondere mit einem metrischen Gewinde, z.B. M10, versehen, das in den Innengewindeabschnitt 4 der Verbindungsmuffe 1 paßt.

Die Vorrichtung enthält weiter einen Pufferkörper 26 in Form einer ringförmigen Scheibe, die eine zur Durchführung des Außengewindeabschnitts 21 bestimmte Mittelöffnung aufweist und in an sich bekannter Weise aus einem Material besteht, das sich unter Druck geringfügig verformen läßt. Der Pufferkörper 26 weist zweckmäßig einen wenigstens dem Außendurchmesser der Verbindungsmuffe 1 entsprechenden Außendurchmesser auf.

Der an der Wand 17 zu befestigende Gegenstand 16, hier z.B. ein schematisch angedeuteter Handgriff, enthält überall dort, wo er mit der Wand 17 fest verbunden werden soll, einen hohl ausgeformten, eine Aufnahmeöffnung 27 umgebenden Endabschnitt 28, der an einer ringförmigen Stirnfläche 29 endet und in einem von dieser beabstandeten Wandabschnitt mit einer Querbohrung 30 versehen ist. Die Aufnahmeöffnung 27 besitzt einen im wesentlichen dem Außenquerschnitt des Abschnitts 22 des Bolzens 19 entsprechenden Innenquerschnitt, ist jedoch in einem an die Stirnflächen 29 grenzenden Bereich mit einer Erweiterung 31 versehen, die groß genug ist, um das Anschlagelement 25 und den Pufferkörper 26 vollständig in sich aufzunehmen.

Nach Fig. 6 besteht die Wand 17 aus einem Hohlprofil 33, das beispielsweise einen rechteckigen, eine Glasscheibe 34 einfassenden Rahmen bildet, wie dies von Glastüren her allgemein bekannt ist. Das Hohlprofil 33 weist mehrere, parallele, aus z.B. 2 mm dünnen Stahl- oder Aluminiumblechen hergestellte Wandteile 35, 36 und 37 auf, zwischen denen Hohlräume vorhanden sind.

Die Montage des Gegenstands 16 mit Hilfe der beschriebenen Befestigungsvorrichtung erfolgt z.B. auf die folgende Weise.

Es werden zunächst die Wandteile 35, 36 und 37 mit koaxial aufeinander ausgerichteten, durchgehenden Bohrungen versehen, die hier z.B. Innendurchmesser von 14 mm aufweisen, was im wesentlichen dem Außendurchmesser des Führungsabschnitts 10 der Verbindungsmuffe 1 entspricht. Anschließend wird die Verbindungsmuffe 1, beginnend mit dem Ende 8, in die Bohrung des Wandteils 35 eingeführt, bis eine weitere Einführung wegen des beginnenden Außengewindeabschnitts 3 bzw. des diesem gegenüber kleineren Bohrungsdurchmessers nicht mehr möglich ist. Die Verbindungsmuffe 1 wird dann mit einem in das Sechskantloch 7 eingeführten Imbusschlüssels in Richtung des Pfeils v (Fig. 5) gedreht, wodurch der Außengewindeabschnitt 3 den Bohrungsquerschnitt nach Art eines Gewindeschneiders allmählich vergrößert, bis der erste, den Nenndurchmesser aufweisende Gewindegang 13 durch die Bohrung treten kann. Entsprechendes gilt dann für die folgenden Gewindegänge 13. Mit besonderem Vorteil wird dabei die Gewindesteigung etwa so groß gewählt, wie der Wandstärke entspricht, damit sich der Außengewindeabschnitt 3 ohne wesentliches Axial- und Radialspiel in den Wandabschitt 35 eindrehen läßt. Im weiteren Verlauf treten der Einführungs- und Führungsabschnitt 9 bzw. 10 nacheinander in die Bohrung des Wandabschnitts 36 und schließlich auch in die Bohrung des Wandabschnitts 37 ein. Dabei vermeidet der Führungsabschnitt 10 insbesondere Verkantungen der Verbindungsmuffe 1 schräg zu der mit den Achsen der Bohrungen koaxialen Längsachse 2, wodurch eine senkrechte Lage der Verbindungsmuffe 1 zu den ebenen Oberflächen der Wandteile 35, 36 und 37 sichergestellt wird.

Im weiteren Verlauf legt sich schließlich der Anlageflansch 5 an die Außenseite des Wandteils 35 an, bis die Verbindungsmuffe 1 axial und radial fest in der Wand 17 festgelegt ist. Es wird nun zunächst der Pufferkörper 26 auf den Außengewindeabschnitt 21 des Bolzens 19 aufgezogen. Danach wird der Außengewindeabschnitt 21 in die Verbindungsmuffe 1 eingedreht, wobei sich entsprechend Fig. 6 der Pufferkörper 26 auf den Anlageflansch 5 auflegt, zu welchem Zweck der Außendurchmesser des Pufferkörpers 26 zweckmäßig entsprechend größer als der Innendurchmesser der Mittelöffnung des Anlageflansches 5 ist.

Abschließend wird der Bolzen 19 mittels eines vorzugsweise an das Anschlagelement 25 angesetzten Werkzeugs in der Verbindungsmuffe 1 festgezogen, bis der Pufferkörper 26 fest zwischen dem Wandteil 35 und dem Anschlagelement 25 verspannt ist.

Die Maße der beschriebenen Teile der Vorrichtung sind so gewählt, daß nach dem beschriebenen Festziehvorgang die Abstände der Querbohrungen 23 bzw. 30 des Bolzenabschnitts 22 bzw. des Endabschnitt 28 von der Oberfläche des Wandabschnitt 35 im wesentlichen gleich sind. Sind daher die beiden Bohrungen nach dem Festziehvorgang bereits aufeinander ausgerichtet, wird der Sicherungsstift 24 in beide eingeführt (Fig. 6), um dadurch den Endabschnitt 28 fest mit dem Bolzen 19 bzw. dessen Montageabschnitt 22 zu verbinden. Nimmt dagegen der Endabschnitt 28 bei in Sollstellung befindlichem Gegenstand 16 eine solche relative Stellung zum Bolzen ein, daß die beiden Querbohrungen 23, 30 nicht aufeinander ausgerichtet sind, dann wird der Bolzen 19 noch etwas in Festdrehrichtung weitergedreht, was durch geringfügiges Verformen bzw. Stauchen des Pufferkörpers 26 möglich ist, bis die erforderliche Ausrichtung der beiden Querbohrungen 23, 30 erreicht ist und der Sicherungsstift 24 eingesteckt werden kann. Dabei sind die beiden Querbohrungen 23, 30 in dieser Stellung vorzugsweise so von der Oberfläche des Wandteils 35 beabstandet, daß die Stirnfläche 29 des Endabschnitts 28 beim Eindrücken des Sicherungsstifts 24 aufgrund einer gewissen Keilwirkung fest gegen die Oberfläche des Wandabschnitts 35 gedrückt wird.

Die Erfindung bringt den bereits beschriebenen Vorteil mit sich, daß die Verbindungsmuffe 1 trotz der vergleichsweise dünnen Wandabschnitte 35, 36 und 37 axial und radial fest in der Wand 17 festgelegt werden kann. Vorteilhaft ist ferner, daß die Verbindungsmuffe 1 als Wandler für die verschiedenen zweckmäßigen Gewindesteigungen wirkt. Einerseits kann nämlich ihr Außengewindeabschnitt 3 eine so große Steigung besitzen, wie es für das feste Eindrehen der Verbindungsmuffe 1 in die Wand 17 zweckmäßig ist, während andererseits der Innengewindeabschnitt 4 der Verbindungsmuffe 1 und der Außengewindeabschnitt 21 des Bolzens 19 mit einer im Vergleich zum Außengewindeabschnitt 3 sehr viel kleineren, insbesondere mit einer so kleinen Gewindesteigung versehen werden, daß ein nach dem Festziehen des Außengewindeabschnitts 21 in der Verbindungsmuffe 1 etwa erforderliches Weiterdrehen des Bolzens 19 zwecks Ausrichtung der Querbohrungen 23, 30 zu keiner störenden Abstandsänderung der Querbohrung 23 von der Wandoberfläche führt. Wird beispielsweise für den Außengewindeabschnitt 21 und den Innengewindeabschnitt 4 ein übliches M8-Gewinde verwendet, dann beträgt die Gewindesteigung nur ca. 1,25 mm, so daß einer halben Umdrehung des Bolzens 19 eine Abstandsänderung von weniger als 0,7 mm entspricht. Diese Abstandsänderung ist so klein, daß sie im Rahmen der vorliegenden Erfindung vernachlässigt werden kann.

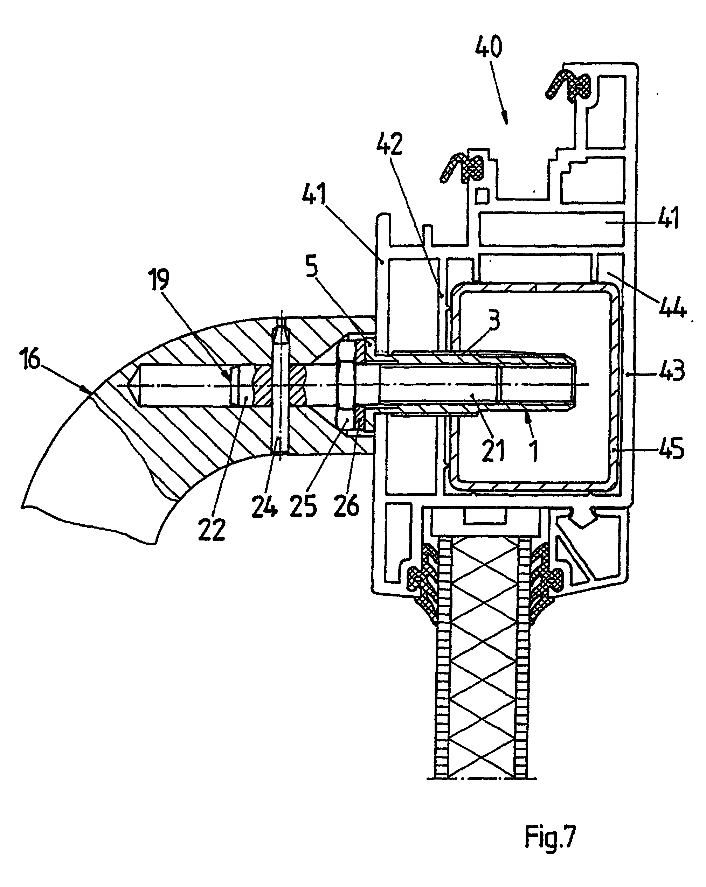

Die Ausführungsform nach Fig. 7 unterscheidet sich von der nach Fig. 6 nur dadurch, daß eine wiederum von einem Türflügel gebildete Wand 40 durch ein aus Kunststoff hergestelltes Hohlprofil 41 gebildet wird, das auf derjenigen Seite, an der der Gegenstand 16 angebracht werden soll, zwei parallele Wandabschnitte 42, 43 aufweist. Im übrigen sind in Fig. 7 gleiche Teile mit denselben Bezugszeichen wie in Fig. 6 versehen.

Da die ebenfalls nur ca. 2 mm dünnen, aus Kunststoffplatten bestehenden Wandteile zur Montage von schweren Gegenständen wie Handgriffen oder dgl. nicht ausreichend stabil sind, ist ein durch das Wandteil 42 und ein dazu paralleles rückwärtiges Wandteil 43 gebildeter Hohlraum 44 mit einer Armierung versehen, die z.B. aus einem in den Hohlraum 44 eingesetzten Stahlrohr 45 von entsprechendem Querschnitt besteht. Die Befestigung des Gegenstand 16 kann dann auf dieselbe Weise wie in Fig. 6, jedoch mit dem Unterschied erfolgen, daß der Außengewindeabschnitt 3 der Verbindungsmuffe 1 auch in eine Bohrung des Stahlrohrs 45 eingedreht wird. Dadurch ist auch eine sichere Befestigung des Gegenstands 16 an einem vergleichsweise flexiblen, allein nicht ausreichend tragfähigen Kunststoff-Türrahmen möglich.

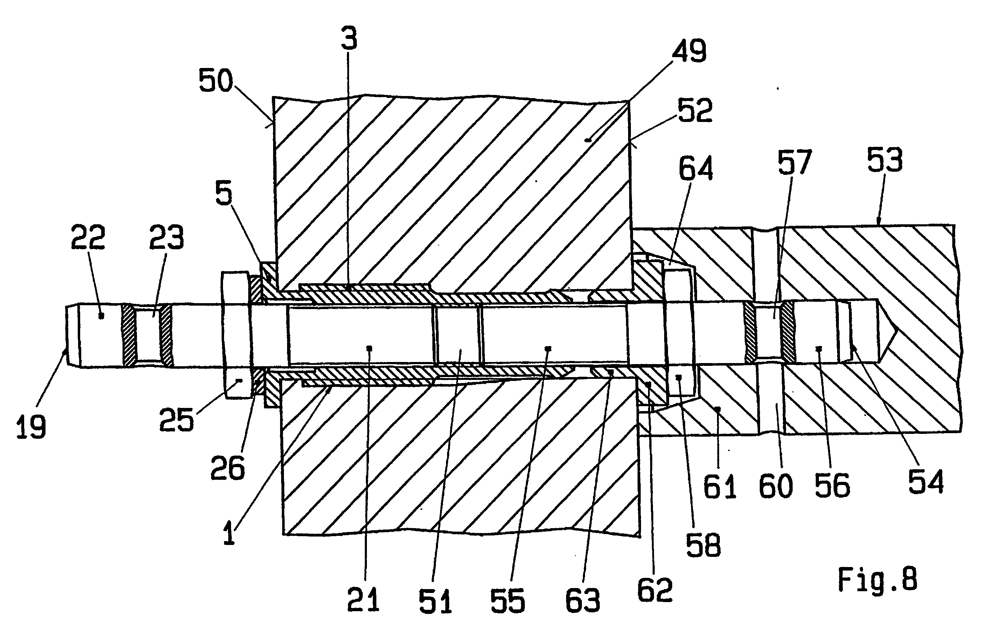

Die Ausführungsform nach Fig. 8 unterscheidet sich von den Ausführungsformen nach Fig. 6 und 7 dadurch, daß hier die Befestigung wenigstens eines Bolzens 19 nach Fig. 6 und 7 an einer massiven Wand 49 aus einem vergleichsweise weichem Material wie z.B. Holz vorgesehen ist. Dabei sind gleiche Teile wiederum mit denselben Bezugszeichen wie in Fig. 6 und 7 versehen. Der Gegenstand 16 ist der Einfachheit halber in Fig. 8 nicht dargestellt.

Soll nur der Bolzen 19 an der Wand 49, z.B. einem Türflügel, befestigt werden, wird analog zu Fig. 6 und 7 vorgegangen, wobei die Wand 49 mit einer zweckmäßig senkrecht zur Wandoberfläche 50 verlaufenden Bohrung 51 versehen wird, die als Blindbohrung ausgebildet werden kann und einen kleineren Durchmesser erhält, als dem Nenndurchmesser des Außengewindeabschnitts 3 der Verbindungsmuffe 1 entspricht. Auch in diesem Fall gräbt sich der Außengewindeabschnitt 3 der Verbindungsmuffe 1 vergleichsweise leichtgängig in die Bohrungswand ein, insbesondere wegen der anhand der Fig. 1 bis 5 beschriebenen Schneidkanten 11. Soll dagegen auch an der zur Wandoberfläche 50 parallelen Wandoberfläche 52 der Wand 49 ein Gegenstand 53 in Form eines weiteren Handgriffs oder dgl. befestigt werden, wird die Bohrung 51 als durchgehende Bohrung ausgebildet.

Zur Befestigung des Gegenstands 53 dient ein Bolzen 54, insbesondere Stehbolzen, der analog zum Bolzen 19 ausgebildet ist und einen Außengewindeabschnitt 55, einen Montageabschnitt 56 mit einer Querbohrung 57 und ein Anschlagelement 58 aufweist. Der Außengewindeabschnitt 55 wird dabei durch die Bohrung 51 hindurch und vom zweiten Ende 8 der Verbindungsmuffe 1 her in deren Innengewindeabschnitt 4 eingedreht. Im Gegensatz zu den Ausführungsbeispielen nach Fig. 6 und 7 ist dabei Voraussetzung, das die Verbindungsmuffe 1 und ihr Innengewindeabschnitt 4 in axialer Richtung ausreichend lang und beide Enden 6 und 8 der Verbindungsmuffe offen sind. Ein wesentlicher Vorteil dieser Ausführungsform besteht darin, daß auf beiden Seiten der Wand 49 unter Verwendung derselben Bohrungen 51 und derselben Verbindungsmuffe 1 zwei gleichartige Gegenstände befestigt werden können.

Zum Ausgleich von axialen Lageungenauigkeiten im Hinblick auf die Querbohrung 57, die auf eine Querbohrung 60 in einem Endabschnitt 61 des Gegenstands 53 ausgerichtet werden muß, weist die Vorrichtung nach Fig. 8 zusätzlich einen ring- bzw. scheibenförmigen Pufferkörper 62 aus einem Material analog zu dem des Pufferkörpers 25 auf. Der Pufferkörper 62 ist auf seiner Rückseite zweckmäßig mit einem hülsenförmigen Ansatz 63 versehen, der in die Bohrung 51 eingesteckt werden kann und den Pufferkörper 62 in dieser zentriert. Im übrigen weist der Endabschnitt 61 wie beim Gegenstand 16 eine Aufnahmeöffnung 64 auf, die ausreichend groß ist, um den Pufferkörper 62 und das Anschlagelement 58 in sich aufzunehmen. Da die Bolzen 19, 54 und die Gegenstände 16, 53 im Hinblick auf die Lagen ihrer Querbohrungen 23, 30 bzw. 57, 60 außerdem in der Regel identisch ausgebildet sind, besitzt der Pufferkörper 62 zweckmäßig eine Dicke, die der Summe aus den Dicken des Pufferkörpers 26 und des Anlageflansches 5 entspricht.

Dadurch werden an beiden Wandoberflächen 50, 52 gleiche Abstandsverhältnisse sichergestellt.

Die Erfindung ist nicht auf das beschriebene Ausfünhrungsbeispiel beschränkt, das sich auf vielfache Weise abwandeln läßt. Dies gilt insbesonder für die beschriebene Geometrie und Querschnittsgestaltung der verschiedenen Teile der Verbindungsmuffe 1 und der Befestigungsvorrichtung. Weiterhin ist es möglich, den Anlageflansch 5 wegzulassen und die Pufferkörper 26, 62 direkt an die betreffende Wand anzulegen. Außerdem ist die Erfindung nicht auf die Befestigung von Gegenständen an Türen oder dgl. beschränkt, sondern kann mit entsprechenden Vorteilen auch auf andere, insbesondere unbewegliche Wände angewendet werden. Schließlich versteht sich, daß die verschiedenen Merkmale der Verbindungsmuffe 1 und der Befestigungsvorrichtung auch in einer anderen Weise miteinander kombiniert werden können, als anhand der Fig. 1 bis 8 beschrieben wurde oder aus Fig. 1 bis 8 ersichtlich ist.

## Patentansprüche

1. Verbindungsmuffe (1) mit einem ersten und einem zweiten Ende (6, 8), einem am ersten Ende (6) vorgesehenen Anlageflausch (5), einem zumindest an das erste Ende (6) grenzenden, zum Eindrehen eines Gewindebolzens (19, 54) bestimmten Innengewindeabschnitt (4), einem zur Verankerung in einer Wand (17, 40, 49) oder dgl. bestimmten, eine Mehrzahl von Gewindegängen (13) aufweisenden Außengewindeabschnitt (3), der einen dem zweiten Ende (8) zugewandten Endabschnitt mit wenigstens einer, über einige der Gewindegänge (13) erstreckten Schneidkante (11) aufweist, und einem am zweiten Ende (8) vorgesehen, konischen Einführungsabschnitt (9), **dadurch gekennzeichnet, daß** zwischen dem Endabschnitt und dem Einführungsabschnitt (9) ein zylindrischer Führungsabschnitt (10) mit einem Außendurchmesser vorgesehen ist, der kleiner als der Nenndurchmesser des Außengewindeabschnitts (3) ist, und daß der Außendurchmesser des Außengewindeabschnitts (3) im Bereich des Endabschnitts vom Nenndurchmesser auf den Außendurchmesser des Führungsabschnitts (10) abnimmt.

2. Verbindungsmuffe (1) nach Anspruch 1, **dadurch gekennzeichnet, daß** der Anlageflausch (5) mit einem Sechskantloch (7) versehen ist.

3. Verbindungsmuffe (1) nach Anspruch 1 oder 2, **dadurch gekennzeichnet, daß** sie vier in Umfangsrichtung gleichförmig beabstandete Schneidkanten (11) aufweist.

4. Verbindungsmuffe (1) nach einem der Ansprüche 1 bis 3, **dadurch gekennzeichnet, daß** der Innengewindeabschnitt (4) in axialer Richtung durchgehend ausgebildet ist.

5. Verbindungsmuffe (1) nach einem der Ansprüche 1 bis 4, **dadurch gekennzeichnet, daß** der Innengewindeabschnitt (4) eine kleinere Steigung als der Außengewindeabschnitt (3) besitzt.

6. Verbindungsmuffe (1) nach einem der Ansprüche 1 bis 5, **dadurch gekennzeichnet, daß** sie aus gehärtetem Stahl besteht.

7. Vorrichtung zur Befestigung von Gegenständen (16, 53), die mit wenigstens einem eine Stirnfläche (29) und eine Querbohrung (30, 60) aufweisenden, hohl ausgeformten Endabschnitt (28, 61) versehen sind, an einer Wand (17, 40, 49) oder dgl., enthaltend eine Verbindungsmuffe (1) mit einem ersten und zweiten Ende (6, 8), einem zumindest zum ersten Ende (6) hin offenen Innengewindeabschnitt (4) und einem zur Verankerung in der Wand (17, 40, 49) oder dgl. bestimmten Außengewindeabschnitt (3), und einen Bolzen (19, 54), der einen in den Innengewindeabschnitt (4) der Verbindungsmuffe (1) passenden Außengewindeabschnitt (21, 55), einen zur Einführung in den Endabschnitt (28, 61) bestimmten, eine Querbohrung (23, 57) aufweisenden Montageabschnitt (22, 56) und in einem mittleren Teil ein Anschlagelement (25, 58) aufweist, wobei der Endabschnitt (28, 61) im befestigten Zustand das Anschlagelement (25, 58) in sich aufnimmt, mit seiner Stirnfläche (29) am Wandteil (17, 40, 49) anliegt und mit einer Querbohrung (30, 60) auf die Querbohrung (23, 57) des Bolzens (19, 54) ausrichtbar ist, **dadurch gekennzeichnet, daß** die Verbindungsmuffe (1) nach einem oder mehreren der Ansprüche 1 bis 6 ausgebildet ist.

8. Vorrichtung nach Anspruch 7, **dadurch gekennzeichnet, daß** sie einen ersten ringförmigen, zur Anordung zwischen der Wand (17, 40, 49) oder der Verbindungsmuffe (1) und dem Anschlagelement (25, 58) bestimmten, unter Druck verformbaren Pufferkörper (26) aufweist.

9. Vorrichtung nach Anspruch 7 oder 8, **dadurch gekennzeichnet, daß** sie zwei Bolzen (19, 54) nach Anspruch und einen zweiten, ringförmigen Pufferkörper (62) aufweist.

10. Vorrichtung nach Anspruch 9, **dadurch gekennzeichnet, daß** der zweite Pufferkörper (62) eine Dicke besitzt, die gleich der Summe aus der Dicke des ersten Pufferkörpers (26) und der Dicke des Anlageflansches (5) ist.

## Claims

1. Junction sleeve (1) having a first and a second end (6, 8), having a contact flange (5) provided on the first end (6), having an internally threaded portion (4), which abuts at least on the first end (6) and is intended for screwing-in of a threaded bolt (19, 54), having an externally threaded portion (3), which is intended for anchoring in a wall (17, 40, 49) or the like and has a plurality of threads (13), said externally threaded portion having an end portion, orientated towards the second end (8), with at least one cutting edge (11) which extends over some of the threads (13), and having a conical insertion portion (9) provided on the second end (8), **characterised in that**, between the end portion and the insertion portion (9), a cylindrical guide portion (10) is provided with an external diameter which is smaller than the nominal diameter of the externally threaded portion (3), and **in that** the external diameter of the externally threaded portion (3) reduces from the nominal diameter to the external diameter of the guide portion (10) in the region of the end portion.

2. Junction sleeve (1) according to claim 1, **characterised in that** the contact flange (5) is provided with a hexagonal hole (7).

3. Junction sleeve (1) according to claim 1 or 2, **characterised in that** it has four cutting edges (11) which are uniformly spaced in the circumferential direction.

4. Junction sleeve (1) according to one of the claims 1 to 3, **characterised in that** the internally threaded portion (4) is configured continuously in the axial direction.

5. Junction sleeve (1) according to one of the claims 1 to 4, **characterised in that** the internally threaded portion (4) has a smaller pitch than the externally threaded portion (3).

6. Junction sleeve (1) according to one of the claims 1 to 5, **characterised in that** it is made of hardened steel.

7. Device for fastening objects (16, 53), which are provided with at least one hollow shaped end portion (28, 61) having an end face (29) and a transverse boring (30, 60), to a wall (17, 40, 49) or the like, containing a junction sleeve (1) having a first and second end (6, 8), having an internally threaded portion (4), which is at least open towards the first end (6), and having an externally threaded portion (3) which is intended for anchoring in the wall (17, 40, 49) or the like, and containing a bolt (19, 54), which has an externally threaded portion (21, 55) which fits into the internally threaded portion (4) of the junction sleeve (1), has a mounting portion (22, 56) which is intended for insertion into the end portion (28, 61) and has a transverse boring (23, 57), and has a limit stop element (25, 58) in a middle part, the end portion (28, 61) receiving in itself the limit stop element (25, 58) in the attached state, abutting on the wall part (17, 40, 49) with its end face (29), and being able to be aligned with one transverse boring (30, 60) towards the transverse boring (23, 57) of the bolt (19, 54), **characterised in that** the junction sleeve (1) is configured according to one or more of the claims 1 to 6.

8. Device according to claim 7, **characterised in that** it has a first annular buffer body (26) which is intended for disposing between the wall (17, 40, 49) or the junction sleeve (1) and the limit stop element (25, 58) and can be deformed under pressure.

9. Device according to claim 7 or 8, **characterised in that** it has two bolts (19, 54) according to the claim and a second annular buffer body (62).

10. Device according to claim 9, **characterised in that** the second buffer body (62) has a thickness which is equal to the sum of the thickness of the first buffer body (26) and of the thickness of the contact flange (5).

## Revendications

1. Manchon de raccordement (1) comprenant une première et une deuxième extrémité (6, 8), une bride d'appui (5) prévue à la première extrémité (6), un segment taraudé (4) contigu au moins à la première extrémité (6), destiné à l'introduction par rotation d'un axe fileté (19, 54), un segment fileté (3) présentant plusieurs pas (13), destiné à l'ancrage dans une paroi (17, 40, 49) ou similaire, qui présente un segment d'extrémité tourné vers la deuxième extrémité (8), muni d'au moins un bord coupant (11) s'étendant sur quelques-uns des pas du filetage (13), et un segment d'introduction (9) conique prévu à la deuxième extrémité (8), **caractérisé en ce qu'**il est prévu, entre le segment d'extrémité et le segment d'introduction (9), un segment de guidage cylindrique (10) dont le diamètre extérieur est inférieur au diamètre nominal du segment fileté (3) et **en ce que** le diamètre extérieur du segment fileté (3) diminue, dans la zone du segment d'extrémité, pour passer du diamètre nominal au diamètre extérieur du segment de guidage (10).

2. Manchon de raccordement (1) selon la revendication 1, **caractérisé en ce que** la bride d'appui (5) est munie d'un trou hexagonal (7).

3. Manchon de raccordement (1) selon la revendication 1 ou 2, **caractérisé en ce qu'**il présente quatre bords coupants (11) situés à intervalles réguliers dans le sens périphérique.

4. Manchon de raccordement (1) selon l'une quelconque des revendications 1 à 3, **caractérisé en ce que** le segment taraudé (4) est formé en continu dans le sens axial.

5. Manchon de raccordement (1) selon l'une quelconque des revendications 1 à 4, **caractérisé en ce que** le segment taraudé (4) possède une pente plus faible que le segment fileté (3).

6. Manchon de raccordement (1) selon l'une quelconque des revendications 1 à 5, **caractérisé en ce qu'**il est réalisé en acier trempé.

7. Dispositif pour fixer à une paroi (17, 40, 49) ou similaire des objets (16, 53) qui sont munis d'au moins un segment d'extrémité (28, 61) formé en creux, présentant une face frontale (29) et un orifice transversal (30, 60), contenant un manchon de raccordement (1) avec une première et une deuxième extrémité (6, 8), un segment taraudé (4) ouvert au moins vers la première extrémité (6) et un segment fileté (3) destiné à l'ancrage dans la paroi (17, 40, 49) ou similaire, et un axe (19, 54) qui présente un segment fileté (21, 55) s'ajustant dans le segment taraudé (4) du manchon de raccordement (1), un segment de montage (22, 56) présentant un orifice transversal (23, 57), destiné à être introduit dans le segment d'extrémité (28, 61) et un élément de butée (25, 58) dans une partie centrale, le segment d'extrémité (28, 61), dans lequel est logé l'élément de butée (25, 58) en position de fixation, reposant avec sa face frontale (29) contre la partie de la paroi (17, 40, 49), et pouvant être aligné avec un orifice transversal (30, 60) sur l'orifice transversal (23, 57) de l'axe (19, 54), **caractérisé en ce que** le manchon de raccordement (1) est formé selon une ou plusieurs des revendications 1 à 6.

8. Dispositif selon la revendication 7, **caractérisé en ce qu'**il présente un premier corps tampon annulaire (26) déformable sous la pression, destiné à être disposé entre la paroi (17, 40, 49) ou le manchon de raccordement (1) et l'élément de butée (25, 58).

9. Dispositif selon la revendication 7 ou 8, **caractérisé en ce qu'**il présente deux axes (19, 54) selon la revendication et un deuxième corps tampon annulaire (62).

10. Dispositif selon la revendication 9, **caractérisé en ce que** le deuxième corps tampon (62) possède une épaisseur qui est égale à la somme des épaisseurs du premier corps tampon (26) et de la bride d'appui (5).
